# EUROPÄISCHE PATENTSCHRIFT

(11) **EP 0 719 009 B1**
(45) Veröffentlichungstag und Bekanntmachung des Hinweises auf die Patenterteilung: **30.06.1999**
(21) Anmeldenummer: 94120517.1
(22) Anmeldetag: 23.12.1994
(51) Int. Cl.: H04L 12/433

(54) **Datennetzwerk und Verfahren zur zeitrichtigen Übertragung von Datenpaketen in einem Datennetzwerk**
Data communication network and method for the transmission of data packets in due time on a data communication network
Réseau de données et méthode de transmission de paquets de données au moment prévu dans un réseau de données

(43) Veröffentlichungstag der Anmeldung: 26.06.1996
(73) Patentinhaber: Hewlett-Packard GmbH, D-71034 Böblingen (DE)
(72) Erfinder: Fischbach, Jürgen, D-88400 Biberach (DE); Greiner, Harald, D-71409 Schwaikheim (DE); Kuhn-Wettemann, Beate, D-70806 Kornwestheim (DE)
(74) Vertreter: Kurz, Peter

(56) Entgegenhaltungen:
- EP-A- 0 448 494
- EP-A- 0 625 838
- US-A- 4 709 364

## Beschreibung

Die vorliegende Erfindung bezieht sich auf ein Datennetzwerk mit einer Mehrzahl von räumlich verteilten Stationen, deren Zugriff auf das Netzwerk durch ein Token gesteuert wird, sowie auf ein Verfahren zur zeitrichtigen Übertragung von Datenpaketen in einem solchen Datennetzwerk, vorzugsweise zur Verbindung mehrerer medizinischer Geräte miteinander.

In einem modern eingerichteten Operationssaal oder in einer Intensivstation eines Krankenhauses werden zunehmend mehr medizinische Geräte zur aktiven und passiven Behandlung eines Patienten verwendet, wobei die meisten dieser Geräte über eingebaute Rechnersysteme verfügen. Beispiele solcher medizinischer Geräte sind Patientenmonitore zur Messung, Darstellung und Aufzeichnung von Patientendaten, wie zum Beispiel einem Elektrokardiogramm, dem Blutdruck, der Temperatur, der Sauerstoffsättigung im Blut, usw., Atemgas-Analysesysteme, Analysesysteme für Proben, zum Beispiel Blutproben, Anästhesie-Systeme, etc..

Im allgemeinen handelt es sich bei diesen medizinischen Geräten um Einzelgeräte, die jeweils eine spezifische Bedienung erfordern.

Werden solche Geräte in einem Datennetzwerk miteinander verbunden, so werden an das Kommunikationssystem unterschiedlichste Anforderungen gestellt. Dies liegt an den unterschiedlichen Daten die verschiedene Geräte erzeugen. Beispielsweise erzeugt eine EKG-Messung sehr viele Meßwerte pro Zeiteinheit, bei denen eine Verzögerung zwischen der Messung und der Darstellung der Meßwerte im wesentlichen konstant sein muß, wobei der Betrag der Verzögerung möglichst klein sein muß. Genauso sollte bei der Messung des invasiven Blutdruckes die Verzögerung zwischen Druckschwankungen und deren Darstellung auf einem Bildschirm höchstens 200 - 400 ms betragen.

Im Gegensatz dazu erfordern andere Geräte, die sich langsam verändernde Parameter, wie zum Beispiel die Körpertemperatur, messen, keine so häufigen Meßwertübertragungen.

In einem solchen Netzwerk ist es erforderlich, daß die verschiedenen Geräte ihre Meßwerte zu bestimmten Zeitpunkten übertragen. Hierbei müssen sogenannte Zeitgarantien eingehalten werden, das heißt, bestimmte Meßwerte müssen spätestens nach einer festgelegten, maximalen Verzögerungszeit beim Empfänger angekommen sein.

Im Stand der Technik sind einfache sogenannte Tokenverfahren bekannt, die eine Zuteilung des Senderechts an jede Station in einer zyklischen Reihenfolge regeln. Aus der EP-A-0 625 838 ist ein Token-Ring-Netzwerk bekannt, bei dem eine zeitrichtige Übertragung von Daten zeitkritischer Anwendungen, z.B. Multimedia-Anwendungen, durch Vergabe eines bestimmten Prioritätswertes, Zuteilung eines garantierten Datendurchsatzes sowie einer maximalen Token-Haltezeit erreicht wird.

Der unter Berücksichtigung anderer Anwendungen mögliche Datendurchsatz wird durch einen LAN Segment Ressourcen Manager ermittelt und zugeteilt.

Ausgehend von diesem Stand der Technik liegt der vorliegenden Erfindung die Aufgabe zugrunde, ein Verfahren zur zeitrichtigen Übertragung von Datenpaketen in einem Datennetzwerk mit einer Mehrzahl von räumlich verteilten Stationen zu schaffen, bei dem zeitliche Grenzwerte für die Übertragung bestimmter Daten über das Datennetzwerk sicher eingehalten werden.

Diese Aufgabe wird durch ein Verfahren nach Anspruch 1 und Anspruch 2 gelöst.

Der Erfindung liegt ferner die Aufgabe zugrunde, ein Datennetzwerk mit einer Mehrzahl von räumlich verteilten Stationen zu schaffen, bei dem zeitliche Grenzwerte für die Übertragung bestimmter Daten über das Datennetzwerk sicher eingehalten werden.

Diese Aufgabe wird durch ein Datennetzwerk nach Anspruch 8 und Anspruch 9 gelöst.

Beim Gegenstand der vorliegenden Erfindung wird die Dringlichkeit, mit der ein Datenpaket abzusenden ist, um so höher eingestuft, je länger ein Datenpaket in einer der Stationen auf das Absenden wartet und je näher der Zeitpunkt der maximal zulässigen Verzögerungszeit rückt. Folglich werden die dringendsten Pakete versendet.

Dies erfolgt durch eine Bewertung aller Datenpakete abhängig von ihrer bisherigen Wartezeit und der maximal erlaubten Verzögerungszeit. Aufgrund dieser Bewertung wird für jedes Datenpaket eine sogenannte Dringlichkeit festgelegt.

Durch den Vergleich von Datenpaketen in verschiedenen Stationen wird bewirkt, daß nicht die dringendsten Datenpakete einer einzelnen Station zuerst übertragen werden, sondern daß die dringendsten Pakete aller Stationen zuerst übertragen werden.

Bevorzugte Weiterbildungen der vorliegenden Erfindung sind in den Unteransprüchen definiert.

Anhand der beiliegenden Zeichnungen werden im Folgenden bevorzugte Ausführungsbeispiele der vorliegenden Erfindung näher erläutert. Es zeigen:
- Fig. 1: ein Datennetzwerk mit einer Mehrzahl von räumlich verteilten Stationen, deren Zugriff auf das Datennetzwerk durch einen Token gesteuert wird;
- Fig. 2: ein Flußdiagramm, das das erfindungsgemäße Verfahren in einer Station darstellt;
- Fig. 3: die Bewertung von Datenpaketen anhand einer Dringlichkeitsfunktion; und
- Fig. 4: ein Flußdiagramm, das das Sendekapazitätsreservierungsverfahren darstellt.

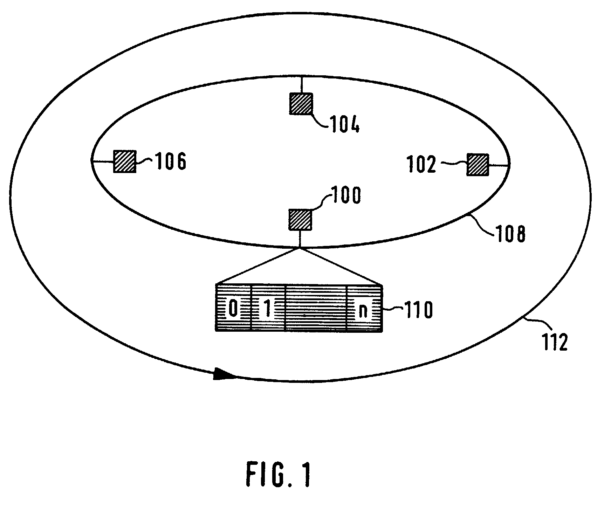

Fig. 1 zeigt eine Mehrzahl von räumlich verteilten Stationen 100, 102, 104 und 106, die über ein Datennetzwerk 108 miteinander verbunden sind.

Die Stationen 100 bis 106 stellen beispielsweise Patientenüberwachungssysteme in unterschiedlichen Räumen einer Intensivstation eines Krankenhauses dar. Die Patientenüberwachungssysteme können verschiedene medizinische Geräte einschließen, wie es zum Beispiel anhand der Station 100 bei 110 gezeigt ist.

Die bei 110 dargestellten medizinischen Geräte umfassen zum Beispiel einen EKG-Monitor, eine Vorrichtung zur invasiven Blutdruckmessung, eine Vorrichtung zur Messung der Körpertemperatur, etc. Bei der EKG-Messung werden sehr viele Meßwerte pro Zeiteinheit erzeugt. Da es wünschenswert ist, einen zusammenhängenden Kurvenzug ohne erkennbare Schwankungen der Darstellungsgeschwindigkeit auf einem Bildschirmgerät, das über das Datennetzwerk 108 angeschlossen ist, darzustellen, ist es erforderlich, eine Übertragung der Meßwerte unter Echtzeitbedingungen durchzuführen. Die Verzögerung zwischen der Messung und der Darstellung muß konstant sein, und der Betrag der Verzögerung muß möglichst klein gehalten werden.

Z. B. sollte bei der Messung eines invasiven Blutdruckes die Verzögerung zwischen den Druckschwankungen und der Darstellung auf dem Bildschirm maximal 200 - 400 ms betragen, damit der Arzt beim Verschieben des Blutdruckkatheters dessen Position im Körper durch eine direkte visuelle Kontrolle überwachen kann. Folglich bleibt für eine reine Datenübertragung ohne graphische Ausgabe und weitere Datenverarbeitungsschritte noch ca. 100 ms Verzögerungszeit.

Bei der Messung der Körpertemperatur werden die Meßwerte in längeren Zeitabständen aufgenommen. Hierbei kann ein Meßwert pro 5 Sekunden ausreichen.

Die oben beschriebenen Beispiele verdeutlichen, daß die Anforderungen verschiedener Stationen an das Datennetzwerk unterschiedlich sind. Die Unterschiede bestehen einerseits in einer maximal zulässigen Verzögerungszeit zwischen der Messung und der Ankunft der Daten am Bestimmungsort und andererseits in den unterschiedlichen Datenmengen. Um diese Unterschiede zu berücksichtigen, werden die Daten unterschiedlichen Klassen zugeordnet, die sich in ihrer maximal zulässigen Verzögerungszeit und in der hierbei übertragbaren Datenpaketgröße unterscheiden. Diese Zuordnung zu vorbestimmten Klassen erfolgt abhängig von den verwendeten medizinischen Geräten.

Die Steuerung des Datenaustausches innerhalb des Datennetzwerkes 108 und zwischen den einzelnen Stationen 100 bis 106 erfolgt über ein sogenanntes Token, das in dem Datennetzwerk von einer Station zur nächsten umläuft, wie es durch den Fall 112 in Fig. 1 dargestellt ist.

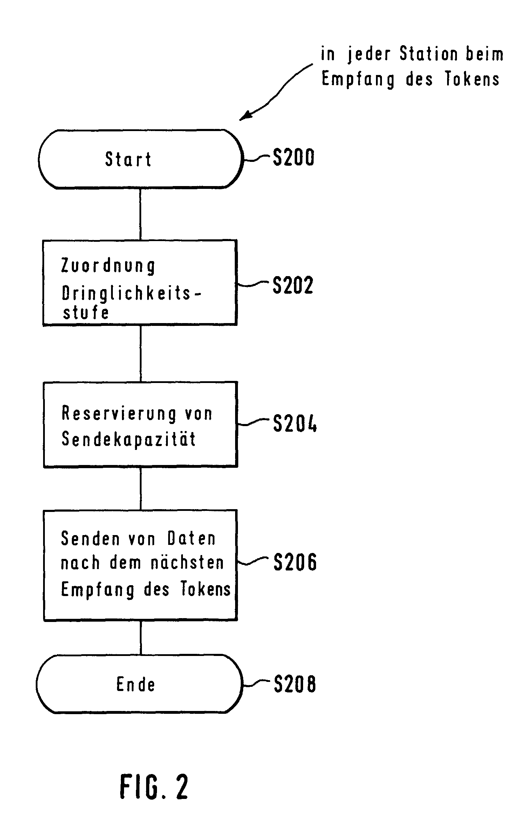

Anhand des Flußdiagramms in Fig. 2 werden im Folgenden die Schritte beschrieben, die das erfindungsgemäße Verfahren in jeder der Stationen beim Empfang des Tokens durchführt.

Nach dem Empfang des Tokens wird im Schritt S200 das Verfahren gestartet.

Im Schritt S202 wird jedem zu sendenden Datenpaket abhängig von der Verweildauer des Datenpakets in der Station eine Dringlichkeitsstufe zugeordnet. Diese Zuordnung wird im Folgenden genauer beschrieben. Ferner werden Datenmengen von Datenpaketen mit gleicher Dringlichkeitsstufe aufsummiert.

Im Schritt S204 erfolgt eine Reservierung von für die Übertragung der Datenpakete benötigter Sendekapazität in dem Token. Diese Reservierung erfolgt abhängig von der verfügbaren Sendekapazität, von der Dringlichkeit und der Datenmenge der von dieser Station zu sendenden Datenpakete und von im Token enthaltenen Informationen über die Dringlichkeit und Datenmenge von von anderen Stationen zu sendenden Datenpaketen.

Nach Abschluß der Reservierung werden im Schritt 206 die Datenpakete gesendet, für die beim vorherigen Empfang des Tokens eine entsprechende Sendekapazität reserviert wurde.

Bei bestimmten Ausführungsbeispielen der vorliegenden Erfindung kann es bevorzugt sein, die im Schritt 206 durchgeführte Absendung von Datenpaketen aufzuteilen. D. h., daß z. B. der Beginn des Sendens zwischen den Schritt 200 und den Schritt 202 gelegt wird, und daß nach dem Schritt 204 gewartet wird, bis alle Datenpakete (falls noch welche vorhanden sind) gesendet sind.

Diese Alternative hat den Vorteil, daß es zu keinem Verlust an Netzwerkbandbreite kommen wird, der hervorgerufen würde, wenn die Absendung der Datenpakete erst im Schritt 204 erfolgt.

Nun endet das Verfahren beim Schritt S208. Der Token läuft zur nächsten Station im Datennetzwerk weiter, in der das Verfahren erneut gestartet wird.

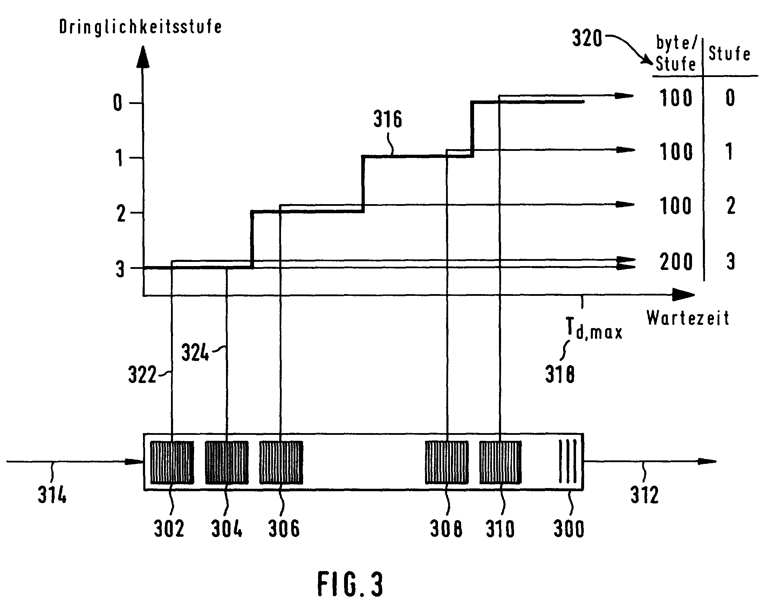

Im Folgenden wird anhand der Fig. 3 die in Fig. 2 im Schritt S202 beschriebene Dringlichkeitsstufe und die Zuordnung der verschiedenen Datenpakete zu dieser näher erläutert.

In Fig. 3 ist bei 300 eine Sendewarteschlange dargestellt, in der sich 5 Pakete 302, 304, 306, 308 und 310 befinden. Die Pakete 308 und 310 befinden sich bereits länger in der Sendewarteschlange 300 und sind entsprechend ihrer Wartezeit in Richtung des Ausgangs 312 der Warteschlange vorgerückt.

Der Ausgang 312 der Sendewarteschlange 300 ist mit dem Eingang einer Übertragungswarteschlange verbunden (nicht dargestellt), in die Datenpakete eingebracht werden, für die eine entsprechende Sendekapazität im Token reserviert wurde, die beim nächsten Empfang des Tokens gesendet werden.

Die Pakete 302, 304 und 306 sind erst vor kürzerer Zeit in die Sendewarteschlange 300 durch deren Eingang 314 eingefügt worden. Der Bereich zwischen dem Paket 306 und dem Paket 308, der keine Pakete enthält, zeigt an, daß während dieser Zeitdauer keine Datenpakete in die Sendewarteschlange 300 eingefügt wurden.

Der Graph oberhalb der Sendewarteschlange 300 zeigt einen Verlauf einer sogenannten Dringlichkeitsfunktion 316, die bei dem bevorzugten Ausführungsbeispiel der vorliegenden Erfindung treppenförmig verläuft. Die einzelnen Stufen der Dringlichkeitsfunktion 316 entsprechen unterschiedlichen Dringlichkeitsstufen, die entlang der vertikalen Achse aufgetragen sind. Hierbei entspricht die Dringlichkeitsstufe Null der höchsten Dringlichkeit, wohingegen die Dringlichkeitsstufe Drei der niedrigsten Dringlichkeit entspricht. Entlang der horizontalen Achse ist die Wartezeit, oder Verweildauer, der Pakete innerhalb der Sendewarteschlange 300 aufgetragen, wobei bei 318 eine maximal zulässige Verzögerungszeit Td,max (Index d,max = delay, maximal = maximale Verzögerung) angezeigt ist.

Rechts neben dem Graph ist eine Tabelle 320 gezeigt, die die Datenmenge in den jeweiligen Dringlichkeitsstufen darstellt.

Für die Darstellung in Fig. 3 ist angenommen, daß alle Datenpakete die gleiche Größe haben, die bei dem bevorzugten Ausführungsbeispiel 100 Byte beträgt.

Den Datenpaketen 302 und 304 ist die Dringlichkeitsstufe Drei zugeordnet, da diese erst vor kurzem in die Sendewarteschlange 300 eingefügt wurden. Diese Zuordnung ist durch die Linien 322, 324 verdeutlicht. Da die Datenpakete 302 und 304 derselben Dringlichkeitsstufe zugeordnet sind, werden die in diesen Datenpaketen enthaltenen Datenmengen summiert, wie es in der letzten Zeile der Tabelle 320 zu sehen ist.

Auf gleiche Weise ist das Datenpaket 306 der Dringlichkeitsstufe Zwei zugeordnet. Da der Dringlichkeitsstufe Zwei lediglich das Datenpaket 306 zugeordnet ist, ergibt sich lediglich die Datenmenge dieses Datenpakets in der Dringlichkeitsstufe Zwei (siehe vorletzte Zeile der Tabelle 320).

Analog gilt dies für das Datenpaket 308 bezüglich der Dringlichkeitsstufe Eins und für das Datenpaket 310 bezüglich der Dringlichkeitsstufe Null.

Gemäß einem bevorzugten Ausführungsbeispiel der vorliegenden Erfindung enthält das durch die Station von der Vorgängerstation empfangene Token eine Gesamtsendekapazität Tfrei und Datenmengen T0...TN-1 von Datenpaketen aller Stationen mit den jeweiligen Dringlichkeitsstufen.

Nach dem Empfang des Tokens werden die in einer Übertragungswarteschlange enthaltenen Datenpakete abgesendet.

Um die beim vorherigen Empfang des Tokens reservierte Kapazität zurückzugewinnen, wird die Gesamtsendekapazität Tfrei um einen in dem vorherigen Tokenumlaufzyklus ermittelten Sendekapazitätswert Sletztes erhöht.

Nachdem die Datenmengen mit den jeweiligen Dringlichkeitsstufen dieser Station abgesendet wurden, werden die Datenmengen T0...TN-1 der Datenpakete aller Stationen mit den jeweiligen Dringlichkeitsstufen um jeweils einen in dem vorherigen Tokenumlaufzyklus ermittelten Datenmengenwert S0...SN-1 jeweils einer Dringlichkeitsstufe erniedrigt.

Nun wird der Sendekapazitätswert Sletztes und der Datenmengenwert S0...SN-1 zurückgesetzt. Bei einem bevorzugten Ausführungsbeispiel wird der Sendekapazitätswert Sletztes und der Datenmengenwert S0...SN-1 auf Null zurückgesetzt.

Anschließend erfolgt die anhand von Fig. 3 beschriebene Zuordnung von Dringlichkeitsstufen zu jedem zu sendenden Datenpaket und das Aufsummieren der Datenmengen der Datenpakete mit jeweils gleicher Dringlichkeitsstufe.

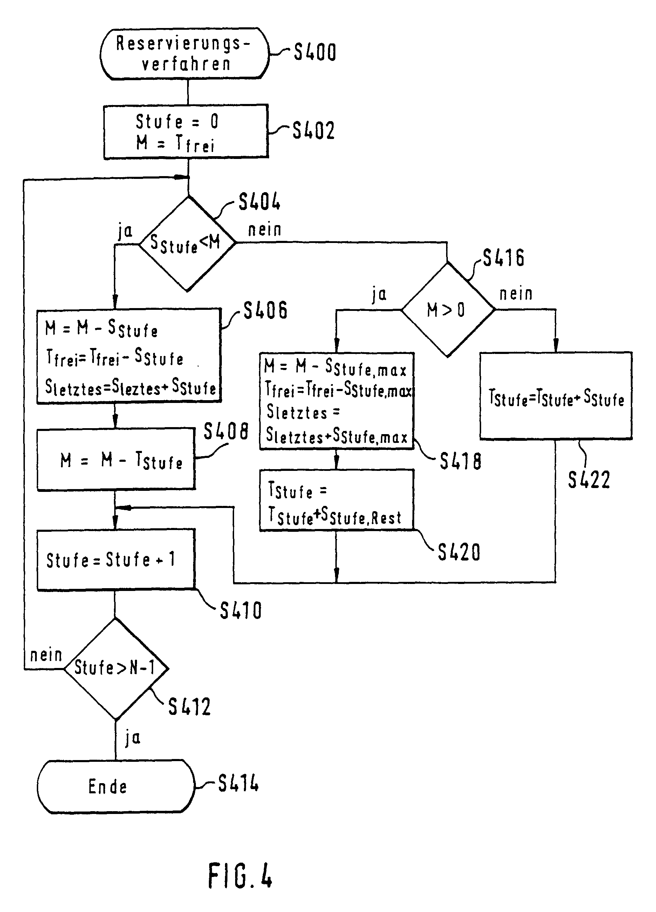

Im Folgenden wird anhand von Fig. 4 das Reservierungsverfahren für die Datenmengen der Dringlichkeitsstufen einer Station beschrieben.

Hierbei werden die folgenden Variablen verwendet:
- Tfrei: Gesamtsendekapazität im Datennetzwerk;
- T0...TN-1: Datenmenge der Datenpakete einer Dringlichkeitsstufe in allen Stationen;
- S0...SN-1: Datenmenge der Datenpakete einer Dringlichkeitsstufe in einer Station;
- Sletztes: Datenmenge aller Datenpakete einer Station, die beim letzten Tokenumlaufreserviertwurde (vorbestimmter Datenmengenwert);
- SStufe: Datenmenge einer Dringlichkeitsstufe in einer Station;
- M: Verfügbare Sendekapazität für alle Stationen;
- TStufe: Datenmenge der Datenpakete dieser Dringlichkeitsstufe aller Stationen;
- SStufe,max: ein Teil der Datenmenge einer Dringlichkeitsstufe dieser Station; und
- SStufe,Rest: die restliche Datenmenge einer Dringlichkeitsstufe dieser Station.

Das Reservierungsverfahren wird beim Schritt S400 gestartet.

Im Schritt S402 wird die Variable "Stufe", die eine Dringlichkeitsstufe darstellt, auf Null gesetzt. Ferner wird die Variable M, die die verfügbare Sendekapazität darstellt, auf die Gesamtsendekapazität eingestellt.

Bei anderen Ausführungsbeispielen kann die verfügbare Sendekapazität neben der Gesamtsendekapazität auch noch anderen Einflüssen ausgesetzt sein, wie z. B. Fremdverkehr.

Im Schritt S404 wird überprüft, ob für die Datenmenge SStufe der Datenpakete mit dieser Dringlichkeitsstufe in dieser Station ausreichend Sendekapazität M verfügbar ist. Wenn dies der Fall ist, geht das Verfahren zum Schritt S406 weiter.

Im Schritt S406 wird die verfügbare Sendekapazität M um die eigene Datenmenge SStufe vermindert, der Sendekapazitätswert Sletztes wird um die eigene Datenmenge SStufe erhöht, und die Gesamtsendekapazität Tfrei wird um die eigene Datenmenge SStufe erniedrigt. In diesem Schritt werden die Datenpakete markiert, die beim nächsten Empfang des Tokens gesendet werden.

Im Schritt S408 wird die verfügbare Sendekapazität M um die Datenmenge TStufe von Datenpaketen dieser Dringlichkeitsstufe aller Stationen reduziert.

Im Schritt S410 wird die variable Stufe um Eins erhöht, das heißt die Abarbeitung der nächsten Dringlichkeitsstufe wird eingeleitet.

Im Schritt S412 wird überprüft, ob alle Dringlichkeitsstufen abgearbeitet wurden oder nicht. Wenn dies der Fall ist, wird das Verfahren im Schritt S414 beendet. Ansonsten kehrt das Verfahren zum Schritt S404 zurück.

Wenn im Schritt S404 festgestellt wird, daß für die eigene Datenmenge SStufe keine ausreichende Sendekapazität M verfügbar ist, geht das Verfahren zum Schritt S416.

Im Schritt S416 wird überprüft, ob noch verfügbare Sendekapazität M vorhanden ist. Wenn dies der Fall ist, geht das Verfahren zum Schritt S418.

Im Schritt 418 wird die verfügbare Sendekapazität M um einen Teil der eigenen Datenmenge SStufe,max reduziert, so daß die verfügbare Sendekapazität M auf Null absinkt. Das heißt der restlichen Sendekapazität M wird ein Teil der Datenmenge zugeordnet, bis diese auf Null zurückgegangen ist. Weiterhin wird der Kapazitätswert Sletztes um den Teil der eigenen Datenmenge SStufe,max erhöht, und die Gesamtsendekapazität Tfrei wird um diesen Teil der eigenen Datenmenge SStufe,max reduziert. In diesem Schritt werden die beim nächsten Empfang des Tokens zu sendenden Datenpakete markiert, die den Teil der Datenmenge enthalten, der aufgrund der vorhandenen Gesamtsendekapazität noch übertragen werden kann.

Im Schritt S420 wird die Datenmenge TStufe von Datenpaketen aller Stationen mit dieser Dringlichkeitsstufe um die verbleibende Datenmenge SStufe,Rest erhöht. Das heißt derjenige Teil der eigenen Datenmenge SStufe, dem keine Sendekapazität M zugeordnet werden konnte, wird zu der Datenmenge TStufe hinzugefügt.

Anschließend geht das Verfahren zum Schritt S410.

Wurde im Schritt S416 festgestellt, daß keine Sendekapazität M mehr verfügbar ist, so wird im Schritt S422 die Datenmenge TStufe von Datenpaketen aller Stationen dieser Dringlichkeitsstufe um die eigene Datenmenge SStufe erhöht.

Anschließend geht das Verfahren zum Schritt S410.

Es ist offensichtlich, daß das oben beschriebene Verfahren nicht ausschließlich auf eine Netzwerkverbindung von medizinischen Geräten anwenden läßt, sondern auf jegliche Art von Datennetzen anwendbar ist, über die Geräte Daten mit unterschiedlichen Anforderungen bezüglich ihrer zulässigen Verzögerungszeit übertragen.

## Patentansprüche

1. Verfahren zur zeitrichtigen Übertragung von Datenpaketen in einem Datennetzwerk mit einer Mehrzahl von räumlich verteilten Stationen, deren Zugriff auf das Netzwerk durch einen Token gesteuert wird, dadurch gekennzeichnet, daß in jeder der Stationen folgende Schritte ausgeführt werden:
- Zuordnen einer Dringlichkeitsstufe (0..N-1) zu jedem zu sendenden Datenpaket abhängig von der Verweildauer des Datenpakets in der Station, und Aufsummieren der Datenmengen der Datenpakete mit jeweils gleicher Dringlichkeitsstufe;
- Reservieren von für die Übertragung von Datenpaketen benötigter Sendekapazität in dem Token in Abhängigkeit von der verfügbaren Sendekapazität, von der Dringlichkeit und der Datenmenge der von dieser Station zu sendenden Datenpakete und von im Token enthaltenen Informationen über die Dringlichkeit und Datenmenge von von anderen Stationen zu sendenden Datenpaketen; und
- Senden der Datenpakete, die der reservierten Sendekapazität entsprechen, nach dem nächsten Empfang des Tokens.

2. Verfahren zur zeitrichtigen Übertragung von Datenpaketen in einem Datennetzwerk mit einer Mehrzahl von räumlich verteilten Stationen, deren Zugriff auf das Netzwerk durch einen Token gesteuert wird, dadurch gekennzeichnet, daß in jeder der Stationen folgende Schritte ausgeführt werden:
a) Empfangen des Tokens von einer Vorgängerstation, dessen Inhalt eine Gesamtsendekapazität (Tfrei) sowie Datenmengen (T0..TN-1) von Datenpaketen aller Stationen mit den jeweiligen Dringlichkeitsstufen (0..N-1) angibt, Absenden von in einer Übertragungswarteschlange enthaltenen Datenpaketen, Erhöhen der Gesamtsendekapazität (Tfrei) um einen in einem vorherigen Tokenumlaufzyklus ermittelten Sendekapazitätswert (Sletztes), Erniedrigen der Datenmengen (T0..TN-1) von Datenpaketen aller Stationen mit den jeweiligen Dringlichkeitsstufen um jeweils einen in einem vorherigen Tokenumlaufzyklus ermittelten Datenmengenwert (S0..SN-1) jeweils einer Dringlichkeitsstufe, und Rücksetzen des Sendekapazitätswertes (Sletztes) und des Datenmengenwertes (S0..SN-1);
b) Zuordnen einer Dringlichkeitsstufe zu jedem zu sendenden Datenpaket abhängig von der Verweildauer des Datenpakets in der Station, und Aufsummieren der Datenmengen der Datenpakete mit jeweils gleicher Dringlichkeitsstufe; und
c) beginnend mit der höchsten Dringlichkeitsstufe:
- Überprüfen, ob für die eigene Datenmenge (SStufe), dieser Dringlichkeitsstufe ausreichend Sendekapazität (M) verfügbar ist;
- falls dies der Fall ist, Vermindern der verfügbaren Sendekapazität (M) um die eigene Datenmenge (SStufe), Erhöhen des Sendekapazitätswertes (Sletztes) um die eigene Datenmenge (SStufe), Vermindern der verfügbaren Sendekapazität (M) um die Datenmenge (TStufe) von Datenpaketen aller Stationen dieser Dringlichkeitsstufe, und Vermindern der Gesamtsendekapazität (Tfrei) um die eigene Datenmenge (SStufe);
- falls dies nicht der Fall ist, Überprüfen, ob noch verfügbare Sendekapazität (M) vorhanden ist;
- falls dies der Fall ist, Vermindern der verfügbaren Sendekapazität (M) um einen Teil der eigenen Datenmenge (SStufe,max.), bis keine Sendekapazität (M) mehr vorhanden ist, Erhöhen des Kapazitätswertes (Sletztes) um den Teil der eigenen Datenmenge (SStufe,max.), Erhöhen der Datenmenge (TStufe) von Datenpaketen aller Stationen dieser Dringlichkeitsstufe um die restliche Datenmenge (SStufe,rest), und Vermindern der Gesamtsendekapazität (Tfrei) um den Teil der eigenen Datenmenge (SStufe,max.);
- falls dies nicht der Fall ist, Erhöhen der Datenmenge (TStufe) von Datenpaketen aller Stationen dieser Dringlichkeitsstufe um die eigene Datenmenge (SStufe).

3. Verfahren nach Anspruch 1 oder 2, bei dem die Verweildauer des Datenpakets in einer Station die maximal zulässige Verzögerung des Datenpakets in der Station einschließt, wobei die Dringlichkeitsstufe (0..N-1) dem Datenpaket anhand einer treppenförmig verlaufenden Dringlichkeitsfunktion zugeordnet wird.

4. Verfahren nach Anspruch 2 oder 3 mit Rückbezug auf Anspruch 2, mit folgendem Schritt vor dem Schritt c):
- Festlegen der Sendekapazität (M) aufgrund der Gesamtsendekapazität (Tfrei).

5. Verfahren nach Anspruch 2, 3 mit Rückbezug auf Anspruch 2 oder 4, bei dem die Gesamtsendekapazität (Tfrei) im Schritt a) einen maximalen Wert nicht überschreitet, der durch die Tokenumlaufzeit definiert ist.

6. Verfahren nach einem der Ansprüche 2, 3 mit Rückbezug auf Anspruch 2, 4 oder 5, bei dem die Datenpakete unterschiedlichen Klassen zugeordnet sind, wobei die Klassen durch die maximal zulässige Verzögerungszeit und eine maximale Datenpaketgröße definiert sind, und wobei die in einer Klasse übertragbare Datenmenge für alle Stationen gleich ist oder für jede einzelne Station festgelegt ist.

7. Verfahren nach einem der Ansprüche 2, 3 mit Rückbezug auf Anspruch 2, 4 bis 6, bei dem der Sendekapazitätswert (Sletztes) und der Datenmengenwert (S0..SN-1) auf Null zurückgesetzt werden.

8. Datennetzwerk mit einer Mehrzahl von räumlich verteilten Stationen zur zeitrichtigen Übertragung von Datenpaketen, deren Zugriff auf das Netzwerk durch einen Token gesteuert wird, dadurch gekennzeichnet, daß jede der Stationen folgende Merkmale aufweist:
- eine Zuordnungseinrichtung zum Zuordnen einer Dringlichkeitsstufe (0..N-1) zu jedem zu sendenden Datenpaket abhängig von der Verweildauer des Datenpakets in der Station, und Aufsummieren der Datenmengen der Datenpakete mit jeweils gleicher Dringlichkeitsstufe;
- eine Reservierungseinrichtung zum Reservieren von für die Übertragung von Datenpaketen benötigter Sendekapazität in dem Token in Abhängigkeit von der verfügbaren Sendekapazität, von der Dringlichkeit und der Datenmenge der von dieser Station zu sendenden Datenpakete und von im Token enthaltenen Informationen über die Dringlichkeit und Datenmenge von von anderen Stationen zu sendenden Datenpaketen; und
- eine Sendeeinrichtung zum Senden der Datenpakete, die der reservierten Sendekapazität entsprechen, nach dem nächsten Empfang des Tokens.

9. Datennetzwerk mit einer Mehrzahl von räumlich verteilten Stationen zur zeitrichtigen Übertragung von Datenpaketen, deren Zugriff auf das Netzwerk durch einen Token gesteuert wird, dadurch gekennzeichnet, daß jede der Stationen folgende Merkmale aufweist:
- eine Tokenempfangseinrichtung zum Empfangen des Tokens von einer Vorgängerstation, dessen Inhalt eine Gesamtsendekapazität (Tfrei) sowie Datenmengen (T0..TN-1) von Datenpaketen aller Stationen mit den jeweiligen Dringlichkeitsstufen (0..N-1) angibt,
- eine Sendeeinrichtung zum Absenden von in einer Übertragungswarteschlange enthaltenen Datenpaketen,
- eine Gesamtsendekapazitätsberechnungseinrichtung zum Erhöhen der Gesamtsendekapazität (Tfrei) um einen in einem vorherigen Tokenumlaufzyklus ermittelten Sendekapazitätswert (Sletztes), zum Erniedrigen der Datenmengen (T0..TN-1) von Datenpaketen aller Stationen mit den jeweiligen Dringlichkeitsstufen um jeweils einen in einem vorherigen Tokenumlaufzyklus ermittelten Datenmengenwert (S0..SN-1) jeweils einer Dringlichkeitsstufe, und zum Rücksetzen des Sendekapazitätswertes (Sletztes) und des Datenmengenwertes (S0..SN-1);
- eine Zuordnungseinrichtung zum Zuordnen einer Dringlichkeitsstufe zu jedem zu sendenden Datenpaket abhängig von der Verweildauer des Datenpakets in der Station, und zum Aufsummieren der Datenmengen der Datenpakete mit jeweils gleicher Dringlichkeitsstufe; und
- eine Sendekapazitätsreservierungseinrichtung mit Mitteln zum, beginnend mit der höchsten Dringlichkeitsstufe,:
- Überprüfen, ob für die eigene Datenmenge (SStufe) dieser Dringlichkeitsstufe ausreichend Sendekapazität (M) verfügbar ist;
- falls dies der Fall ist, Vermindern der verfügbaren Sendekapazität (M) um die eigene Datenmenge (Sstufe), Erhöhen des Sendekapazitätswerts (Sletztes) um die eigene Datenmenge (Sstufe) und Vermindern der verfügbaren Sendekapazität (M) um die Datenmenge (TStufe) von Datenpaketen aller Stationen dieser Dringlichkeitsstufe und der Gesamtsendekapazität (Tfrei) um die eigene Datenmenge (SStufe);
- falls dies nicht der Fall ist, Überprüfen, ob noch verfügbare Sendekapazität (M) vorhanden ist;
- falls dies der Fall ist, Vermindern der verfügbaren Sendekapazität (M) um einen Teil der eigenen Datenmenge (SStufe,max.), bis keine Sendekapazität (M) mehr vorhanden ist, Erhöhen des Kapazitätswertes (Sletztes) um den Teil der eigenen Datenmenge (SStufe,max.) und der Datenmenge (TStufe) von Datenpaketen aller Stationen dieser Dringlichkeitsstufe um die restliche Datenmenge (SStufe,rest) und Vermindern der Gesamtsendekapazität (Tfrei) um den Teil der eigenen Datenmenge (Sstufe,max.);
- falls dies nicht der Fall ist, Erhöhen der Datenmenge (TStufe) von Datenpaketen aller Stationen dieser Dringlichkeitsstufe um die eigene Datenmenge (SStufe).

10. Verfahren nach Anspruch 8 oder 9, bei dem die Verweildauer des Datenpakets in einer Station die maximal zulässige Verzögerung des Datenpakets in der Station einschließt, wobei die Dringlichkeitsstufe (0..N-1) dem Datenpaket anhand einer treppenförmig verlaufenden Dringlichkeitsfunktion zugeordnet wird.

## Claims

1. Method for transmitting data packets at the correct time in a data network having a plurality of spatially distributed stations whose access to the network is controlled by a token, characterized in that the following steps are carried out in each of the stations:
- allocation of an urgency level (0..N-1) to each data packet to be transmitted, depending on the time for which the data packet has been in the station, and addition of the amounts of data in those data packets which each have the same urgency level;
- reservation of transmission capacity (required for the transmission of data packets) in the token as a function of the available transmission capacity, of the urgency and of the amount of data in the data packets to be transmitted by this station, and as a function of information contained in the token, relating to the urgency and amount of data in data packets to be transmitted by other stations; and
- transmission of those data packets which correspond to the reserved transmission capacity, after the token is next received.

2. Method for transmitting data packets at the correct time in a data network having a plurality of spatially distributed stations whose access to the network is controlled by a token, characterized in that the following steps are carried out in each of the stations:
a) reception of the token from a predecessor station, whose contents indicate the total transmission capacity (Tfree) as well as amounts of data (T0..TN-1) in data packets of all the stations with the respective urgency levels (0..N-1), transmission of data packets which are contained in the other transmission queue, increasing the total transmission capacity (Tfree) by a transmission capacity value (Slast) determined in a previous token passing cycle, reducing the amounts of data (T0..TN-1) in the data packets of all the stations having the respective urgency levels by in each case one data amount value (S0..SN-1) (determined in a previous token passing cycle) for each urgency level, and resetting the transmission capacity value (Slast) and the data amount value (S0..SN-1);
b) allocation of an urgency level to each data packet to be transmitted, depending on the time for which the data packet has been in the station, and addition of the amounts of data in those data packets which each have the same urgency level; and
c) starting with the highest urgency level:
- checking to determine whether sufficient transmission capacity (M) is available for the station's own amount of data (Slevel) in this urgency level;
- if this is the case, reducing the available transmission capacity (M) by the station's own amount of data (Slevel), increasing the transmission capacity value (Slast) by the station's own amount of data (Slevel), reducing the available transmission capacity (M) by the amount of data (Tlevel) in the data packets of all the stations of this urgency level, and reducing the total transmission capacity (Tfree) by the station's own amount of data (Slevel);
- if this is not the case, checking to determine whether any transmission capacity (M) is still available;
- if this is the case, reducing the available transmission capacity (M) by a part of the station's own amount of data (Slevel,max.) until there is no longer any transmission capacity (M), increasing the capacity value (Slast) by the part of the station's own amount of data (Slevel,max.), increasing the amount of data (Tlevel) in data packets of all the stations of this urgency level by the remaining amount of data (Slevel,rest), and reducing the total transmission capacity (Tfree) by the part of the station's own amount of data (Slevel,max.);
- if this is not the case, increasing the amount of data (Tlevel) in data packets with all the stations with this urgency level by the station's own amount of data (Slevel).

3. Method according to Claim 1 or 2, in which the time for which the data packet stays in a station includes the maximum permissible delay of the data packet in the station, in which case the urgency level (0..N-1) is allocated to the data packet on the basis of an urgency function which has a staircase profile.

4. Method according to Claim 2 or 3, with reference back to Claim 2, with the following step before step c):
- definition of the transmission capacity (M) on the basis of the total transmission capacity (Tfree).

5. Method according to Claims 2, 3, with reference back to Claim 2 or 4, in which the total transmission capacity (Tfree) in step a) does not exceed a maximum value which is defined by the token cycle time.

6. Method according to one of Claims 2 or 3 with reference back to Claim 2, 4 or 5, in which the data packets are allocated to different classes, in which the classes are defined by the maximum permissible delay time and a maximum data packet size, and in which the amount of data which can be transmitted in a class is the same for all stations or is defined for each individual station.

7. Method according to one of Claims 2 or 3, with reference back to Claims 2 and 4 to 6, in which the transmission capacity value (Slast) and the data amount value (S0..SN-1) are reset to zero.

8. Data network having a plurality of spatially distributed stations for transmitting data packets at the correct time, the access of which stations to the network is controlled by a token, characterized in that each of the stations has the following features:
- an allocation device for allocation of an urgency level (0..N-1) to each data packet to be transmitted, depending on the time for which the data packet has been in the station, and addition of the amounts of data in those data packets each having the same urgency level;
- a reservation device for reservation of transmission capacity (required for the transmission of data packets) in the token as a function of the available transmission capacity, of the urgency and of the amount of data of the data packets to be transmitted by this station, and as a function of information contained in the token, relating to the urgency and amount of data in data packets to be transmitted by other stations; and
- a transmitting device for transmission of those data packets which correspond to the reserved transmission capacity, after the token is next received.

9. Data network having a plurality of spatially distributed stations for transmitting data packets at the correct time, the access of which stations to the network is controlled by a token, characterized in that each of the stations has the following features:
- a token receiving device for reception of the token from a predecessor station, whose contents indicate the total transmission capacity (Tfree) as well as amounts of data (T0..TN-1) in data packets of all the stations with the respective urgency levels (0..N-1),
- a transmitting device for transmission of data packets which are contained in the other transmission queue,
- a total transmission capacity calculating device for increasing the total transmission capacity (Tfree) by a transmission capacity value (Slast) determined in a previous token passing cycle, for reducing the amounts of data (T0..TN-1) in data packets of all the stations with the respective urgency levels in each case by a data amount value (S0..SN-1) (determined in a previous token passing cycle) of in each case one urgency level, and for resetting the transmission capacity value (Slast) and the data amount value (S0..SN-1);
- an allocating device for allocation of an urgency level to each data packet to be transmitted, depending on the time for which the data packet has been in the station, and for addition of the amounts of data in those data packets which each have the same urgency level; and
- a transmission capacity reserving device having means for, starting with the highest urgency level:
- checking whether sufficient transmission capacity (M) is available for the station's own amount of data (Slevel) in this urgency level;
- if this is the case, reducing the available transmission capacity (M) by the station's own amount of data (Slevel), increasing the transmission capacity value (Slast) by the station's own amount of data (Slevel), reducing the available transmission capacity (M) by the amount of data (Tlevel) in the data packets of all the stations of this urgency level, and reducing the total transmission capacity (Tfree) by the station's own amount of data (Slevel);
- if this is not the case, checking to determine whether any transmission capacity (M) is still available;
- if this is the case, reducing the available transmission capacity (M) by a part of the station's own amount of data (Slevel,max.) until there is no longer any transmission capacity (M), increasing the capacity value (Slast) by the part of the station's own amount of data (Slevel,max.), and increasing the amount of data (Tlevel) in data packets of all the stations of this urgency level by the remaining amount of data (Slevel,rest), and reducing the total transmission capacity (Tfree) by the part of the station's own amount of data (Slevel,max.);
- if this is not the case, increasing the amount of data (Tlevel) in data packets of all the stations of this urgency level by the station's own amount of data (Slevel).

10. Method according to Claim 8 or 9, in which the time for which a data packet stays in a station includes the maximum permissible delay of the data packet in the station, the urgency level (0..N-1) being allocated to the data packet on the basis of an urgency function which has a staircase profile.

## Revendications

1. Procédé de transmission, en temps voulu, de paquets de données dans un réseau de données qui inclut une série de stations réparties dans l'espace, dont l'accès au réseau est commandé par un jeton, caractérisé par les étapes, mises en oeuvre dans chacune des stations, consistant à:
- associer (0..N-1) à chacun des paquets des données à envoyer un niveau d'urgence qui dépend de la durée de séjour du paquet de données dans la station, et additionner les quantités de données des paquets de données dont le niveau de priorité est le même;
- réserver dans le jeton la capacité d'envoi nécessaire pour la transmission de paquets de données en fonction de la capacité d'envoi disponible, de l'urgence et de la quantité de données des paquets de données à envoyer par cette station, et d'informations contenues dans le jeton concernant l'urgence et la quantité de données de paquets de données à envoyer par d'autres stations; et
- envoyer, après la première réception du jeton, les paquets de données qui correspondent à la capacité d'envoi réservée.

2. Procédé de transmission, en temps voulu, de paquets de données dans un réseau de données qui inclut une série de stations réparties dans l'espace, dont l'accès au réseau est commandé par un jeton, caractérisé par les étapes, mises en oeuvre dans chacune des stations, consistant à:
a) recevoir d'une station précédente le jeton dont le contenu indique une capacité d'envoi totale (Tfrei) ainsi que des quantités de données (T0..TN-1) de paquets de données de toutes les stations accompagnées des niveaux respectifs d'urgence (0...N-1), envoyer des paquets de données contenus dans une file d'attente de transmission, augmenter d'une valeur de capacité d'envoi (Sletztes) déterminée lors d'un cycle précédent de la boucle du jeton la capacité d'envoi totale (Tfrei), abaisser d'une valeur respective (S0...SN-1) de quantité de données déterminée pour chaque niveau d'urgence respectif lors d'un cycle précédent de la boucle du jeton chacune des quantités de données (T0..TN-1) de paquets de données à niveaux respectifs d'urgence correspondants de toutes les stations, et restaurer la valeur de capacité d'envoi (Sletztes) et la valeur de quantité de données (S0...SN-1);
b) associer à chaque paquet de données à envoyer un niveau d'urgence qui dépend de la durée de séjour du paquet de données dans la station, et additionner les quantités de données des paquets de données dont le niveau de priorité est le même;
c) en commençant par le niveau d'urgence le plus élevé:
- contrôler si une capacité d'envoi (M) suffisante de ce niveau d'urgence est disponible pour la quantité de données appropriée (SStufe)
- si tel est le cas, réduire de la quantité de données appropriée (Sstufe) la capacité d'envoi disponible (M), augmenter de la quantité de données appropriée (SStufe) la valeur de capacité d'envoi (Sletztes), réduire de la quantité de données (TStufe) de paquets de données de toutes les stations de ce niveau d'urgence la capacité d'envoi disponible (M) et réduire de la quantité de données appropriée (SStufe) la capacité d'envoi totale;
- si tel n'est pas le cas, contrôler s'il existe encore une capacité d'envoi disponible;
- si tel est le cas, réduire d'une partie de la quantité de données appropriée (SStufe, max.) la capacité d'envoi disponible (M) jusqu'à ce qu'il ne subsiste plus aucune capacité d'envoi (M), augmenter de la partie de la quantité de données appropriée (SStufe, max.) la valeur de capacité (Sletztes), augmenter de la quantité de données restantes (SStufe, rest.) la quantité de données (TStufe) de paquets de données de toutes les stations de ce niveau d'urgence, et réduire de la partie de la quantité de données appropriée (SSTufe, max.) la capacité d'envoi totale (Tfrei);
- si tel n'est pas le cas, augmenter de la quantité de données appropriée (SStufe) la quantité de données (TStufe) de paquets de données de toutes les stations de ce niveau d'urgence.

3. Procédé selon la revendication 1 ou 2, dans lequel la durée de séjour du paquet de données dans une station inclut le retard maximal admissible du paquet de données dans la station, le niveau d'urgence (0..N-1) étant associé au paquet de données au moyen d'une fonction d'urgence à tracé en escalier.

4. Procédé selon la revendication 2, ou 3 lorsqu'elle se réfère à la revendication 2, qui inclut en outre avant l'étape c), l'étape suivante:
- fixer la capacité d'envoi (M) sur la base de la capacité d'envoi totale (Tfrei).

5. Procédé selon la revendication 2, ou 3 lorsqu'elles se réfère à la revendication 2, ou 4, dans lequel la capacité d'envoi totale (Tfrei) ne dépasse pas à l'étape a) une valeur maximale qui est définie par le temps de boucle du jeton.

6. Procédé selon la revendication 2, 3 lorsqu'elle se réfère à la revendication 2, 4 ou 5, dans lequel les paquets de données sont associés à des classes différentes, les classes étant définies par le temps de retard maximal admissible et par une dimension maximale de paquet de données, et la quantité de données transmissible dans une classe étant égale pour toutes les stations ou étant fixée pour chaque station individuelle.

7. Procédé selon l'une des revendications 2, 3 lorsqu'elle se réfère à la revendication 2, 4 à 6, dans lequel la valeur de capacité d'envoi (Sletztes) et la valeur de quantité de données (S0...SN-1) sont restaurées à zéro.

8. Réseau de données qui inclut une série de stations réparties dans l'espace, dont l'accès au réseau est commandé par un jeton, pour transmettre des paquets de données en temps voulu, caractérisé en ce que chacune des stations présente les particularités suivantes:
- un dispositif d'association pour associer à chacun des paquets des données à envoyer un niveau d'urgence (0..N-1) qui dépend de la durée de séjour du paquet de données dans la station, et additionner les quantités de données des paquets de données dont le niveau de priorité est le même;
- un dispositif de réservation pour réserver dans le jeton la capacité d'envoi nécessaire pour la transmission de paquets de données en fonction de la capacité d'envoi disponible, de l'urgence et de la quantité de données des paquets de données à envoyer par cette station, et d'informations contenues dans le jeton concernant l'urgence et la quantité de données de paquets de données à envoyer par d'autres stations; et
- un dispositif d'envoi pour envoyer, après la première réception du jeton, les paquets de données qui correspondent à la capacité d'envoi réservée.

9. Réseau de données qui inclut une série de stations réparties dans l'espace, dont l'accès au réseau est commandé par un jeton, pour transmettre des paquets de données en temps voulu, caractérisé en ce que chacune des stations présente les particularités suivantes:
un dispositif de réception de jeton pour recevoir d'une station précédente le jeton dont le contenu indique une capacité d'envoi totale (Tfrei) ainsi que des quantités de données (T0..TN-1) de paquets de données de toutes les stations accompagnées des niveaux respectifs d'urgence (0...N-1),
un dispositif d'envoi pour envoyer des paquets de données contenus dans une file d'attente de transmission,
un dispositif de calcul de capacité d'envoi totale pour augmenter d'une valeur de capacité d'envoi (Sletztes) déterminée lors d'un cycle précédent de la boucle du jeton la capacité d'envoi totale (Tfrei), abaisser d'une valeur respective (S0...SN-1) de quantité de données, déterminée pour chaque niveau d'urgence respectif lors d'un cycle précédent de la boucle du jeton, chacune des quantités de données (T0..TN-1) de paquets de données à niveaux respectifs d'urgence correspondants de toutes les stations, et pour restaurer la valeur de capacité d'envoi (Sletztes) et la valeur de quantité de données (S0...SN-1);
un dispositif d'association pour associer à chaque paquet de données à envoyer un niveau d'urgence qui dépend de la durée de séjour du paquet de données dans la station, et additionner les quantités de données des paquets de données dont le niveau de priorité est le même;
un dispositif de réservation de capacité d'envoi qui comprend des moyens destinés à, en commençant par le niveau d'urgence le plus élevé:
- contrôler si une capacité d'envoi (M) suffisante de ce niveau d'urgence est disponible pour la quantité de données appropriée (SStufe)
- si tel est le cas, réduire de la quantité de données appropriée (Sstufe) la capacité d'envoi disponible (M), augmenter de la quantité de données appropriée (SStufe) la valeur de capacité d'envoi (Sletztes), réduire de la quantité de données (TStufe) de paquets de données de toutes les stations de ce niveau d'urgence la capacité d'envoi disponible (M) et réduire de la quantité de données appropriée (SStufe) la capacité d'envoi totale;
- si tel n'est pas le cas, contrôler s'il existe encore une capacité d'envoi disponible;
- si tel est le cas, réduire d'une partie de la quantité de données appropriée (SStufe, max.) la capacité d'envoi disponible (M) jusqu'à ce qu'il ne subsiste plus aucune capacité d'envoi (M), augmenter de la partie de la quantité de données appropriée (SStufe, max.) la valeur de capacité (Sletztes), augmenter de la quantité de données restantes (SStufe, rest.) la quantité de données (TStufe) de paquets de données de toutes les stations de ce niveau d'urgence, et réduire de la partie de la quantité de données appropriée (SSTufe, max.) la capacité d'envoi totale (Tfrei);
- si tel n'est pas le cas, augmenter de la quantité de données appropriée (SStufe) la quantité de données (TStufe) de paquets de données de toutes les stations de ce niveau d'urgence.

10. Procédé selon la revendication 8 ou 9, dans lequel la durée de séjour du paquet de données dans une station inclut le retard maximal admissible du paquet de données dans la station, le niveau d'urgence (0..N-1) étant associé au paquet de données au moyen d'une fonction d'urgence à tracé'en escalier.
